# EUROPÄISCHE PATENTSCHRIFT

(11) **EP 0 647 168 B1**
(45) Veröffentlichungstag und Bekanntmachung des Hinweises auf die Patenterteilung: **20.03.1996**
(21) Anmeldenummer: 93912568.8
(22) Anmeldetag: 08.06.1993
(51) Int. Cl.: B23K 1/008, B23K 1/005

(54) **VORRICHTUNG ZUM AUFLÖTEN VON BAUELEMENTEN AUF PLATINEN**
DEVICE FOR SOLDERING COMPONENTS TO BOARDS
DISPOSITIF DE SOUDAGE DE COMPOSANTS SUR DES PLAQUETTES

(30) Priorität: 25.06.1992 DE 4220802
(43) Veröffentlichungstag der Anmeldung: 12.04.1995
(73) Patentinhaber: ROBERT BOSCH GMBH, D-70442 Stuttgart (DE)
(72) Erfinder: SAILE, Peter, D-7000 Stuttgart (DE)
(86) Internationale Anmeldenummer: DE9300491
(87) Internationale Veröffentlichungsnummer: WO9400267

(56) Entgegenhaltungen:
- FR-A- 2 318 702
- GB-A- 262 468
- GB-A- 454 574

## Beschreibung

### Stand der Technik

Die Erfindung betrifft eine Vorrichtung zum Auflöten von Bauelementen auf Platinen nach dem Oberbegriff des Anspruchs 1. Derartige Vorrichtungen, im folgenden Durchlaufofen genannt, besitzen in der Regel einen Kanal, an dessen Außen- oder Innenseiten Heizvorrichtungen angebracht sind. Um den Lötvorgang in einer definierten Atmosphäre zu vollziehen, wird Schutzgas bevorzugt in den mittleren Bereich des Kanals eingeblasen, wobei dieses beim Ausströmen in Richtung der Kanalöffnungen den einströmenden bzw. eindiffundierenden Sauerstoff verdrängt. (Siehe z.B. FR-A-2 318 702).

Bei Schutzgas-Durchlauföfen dieser Art muß der Ofenkanal für Wartungs- und Reinigungsarbeiten zugänglich sein. Der somit zwangsläufig teilbare Ofenkanal muß im Betrieb, abgesehen von den Ein- und Auslaßöffnungen, absolut gasdicht sein. Selbst kleinste Mikrorisse in der Ofenwand führen aufgrund des großen Sauerstoffpartialdruckgefälles zu einer erheblichen Anreicherung der Schutzgasatmosphäre mit Sauerstoff und somit zu einer Verschlechterung der Fertigungsqualität. Besonders anfällige Zonen für derartige Mikrolecks sind die Trennstellen des teilbaren Kanals. Bekannte Durchlauföfen besitzen verschraubte oder verspannte Flansche mit eingelegten Kupfer- oder hitzebeständigen Kunststoffdichtungen. Aufgrund der Temperaturwechselbeanspruchungen beim Ein- und Ausschalten der Öfen sowie der betriebsbedingten Temperaturgradienten in Ofenlängsrichtung unterliegen diese Verbindungsstellen großen mechanischen Belastungen.

### Vorteile der Erfindung

Die erfindungsgemäße Vorrichtung mit den Merkmalen des Hauptanspruchs hat demgegenüber den Vorteil, daß temperaturbedingte Längenänderungen einzelner Teile des Durchlaufofens zu keinerlei Spannungen innerhalb des Dichtmittels führen und undichte Stellen nicht auftreten können. Ferner ist der Ofenraum jederzeit leicht zugänglich, wobei es nicht nötig ist, nach einer oder einer bestimmten Anzahl von Öffnungen eine neue, teure, speziell angepaßte Dichtung einzusetzen. Außerdem ist das flüssige Dichtmittel bedeutend billiger und einfacher und schneller auszuwechseln als herkömmliche feste Dichtungen.

Die Abdichtung der beiden Gehäuseteile gegeneinander mittels einer Flüssigkeit ermöglicht eine sichere Gasdichtheit bei geringsten Anforderungen an die Fertigungspräzision.

Durch die in den Unteransprüchen aufgeführten Maßnahmen sind vorteilhafte Ausbildungen der Vorrichtung nach dem Hauptanspruch möglich. Ein einfacher und unkomplizierter Aufbau ergibt sich, wenn ein erstes Gehäuseteil mindestens ein Flüssigkeitsreservoir aufweist, in das ein zweites, vorzugsweise deckelförmiges Gehäuseteil teilweise eintaucht. Das deckelförmige Gehäuseteil wird dann von oben in die ruhende Flüssigkeit gestellt. Ein zusätzliches Verspannen der beiden Gehäuseteile gegeneinander ist nicht nötig, hierfür reicht die Gewichtskraft des aufliegenden, oberen Gehäuseteils.

Ein stabiler, durch thermische Ausdehnung nur geringe mechanische Kräfte verursachender Aufbau kann erreicht werden, wenn die Gehäuseteile sowohl stabile tragende Einzelteile als auch dünnwandige, der Wärmeentwicklung ausgesetzte und den eigentlichen Ofenraum umgreifende Teile aufweist.

Es ist ferner von Vorteil, wenn die die Transporteinrichtung und/oder Heizeinrichtung tragenden Mittel nur einseitig mit dem jeweiligen Gehäuseteil fest verbunden sind und auf einer weiteren Seite lose auf dem Gehäuseteil aufliegen. Dadurch können Wärmeausdehnungen stattfinden, ohne Verspannungen zu erzeugen.

### Zeichnung

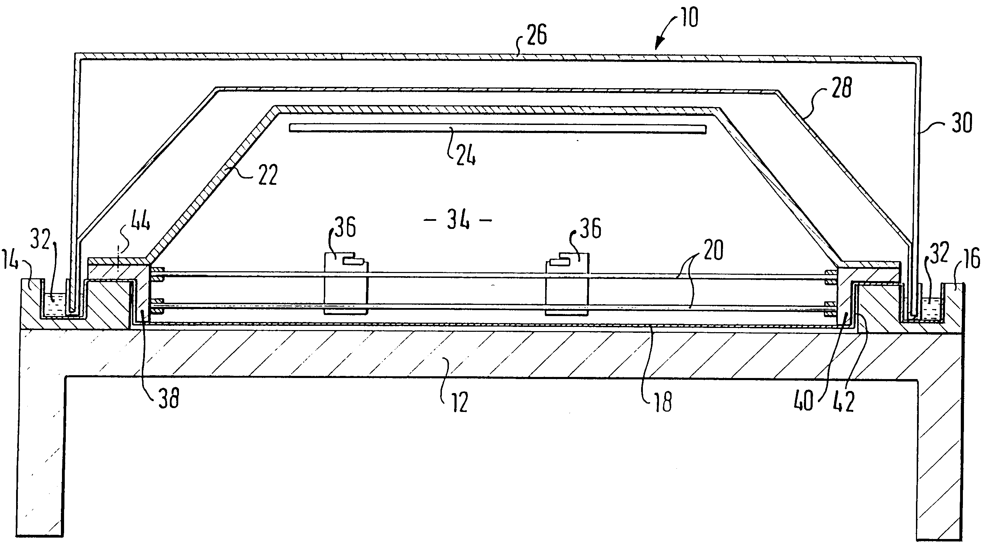

In der einzigen Figur ist das Prinzip der Vorrichtung gezeigt und in der nachfolgenden Beschreibung unter Angabe weiterer Vorteile näher erläutert.

### Beschreibung des Ausführungsbeispiels

Der Durchlaufofen 10, der in Durchgangsrichtung gezeigt ist, liegt auf einem Gestell 12 mit zwei U-förmigen, längsverlaufenden Schienen 14, 16 auf. Die Schienen 14, 16 sind durch ein dünnes Blech 18, einem Gestänge 20 und einem Bügel 22, an dem eine Heizeinrichtung 24 befestigt ist, verbunden. Auf den Schienen 14, 16 liegt eine haubenförmige Abdeckung 26, die ein inwandiges Blech 28 trägt.

Die Abdeckung 26 steht mit ihren nach unten weisenden Schenkeln 30 in den als Flüssigkeitsreservoir ausgebildeten, U-förmigen Aussparungen der Schienen 14, 16, die mit einer Flüssigkeit 32 mindestens soweit aufgefüllt sind, daß die unteren Enden der Schenkel 30 völlig bedeckt sind.

Das einen Innenraum 34 des Durchlaufofens 10 nach unten abschließende Blech 18 ist an seinen beiden den Schienen 14, 16 zugewandten Enden dem U-Profil der Schienen 14, 16 angepaßt, so daß die Flüssigkeit 32 innerhalb dieser profilierten Enden eingefaßt ist.

Das Blech 28 ist an seinen den Schenkeln 30 der Abdeckung 26 zugewandten Enden so profiliert, daß es die Enden der Schenkel 30 so umgreift, daß die Flüssigkeit 32 am profilierten Ende des Blechs 28 und nicht an den Enden der Schenkel 30 direkt anliegt. Dadurch ergibt sich insgesamt ein durch die Bleche 18 und 28 angefaßter Innenraum 34, wobei die Bleche direkt durch die Flüssigkeit 32 gegeneinander abgedichtet sind.

Das eine Transporteinrichtung 36 aufnehmende Gestänge 20 ist mittels eines Winkelprofils 38 fest mit der Schiene 14 verbunden und mittels eines weiteren Winkelprofils 40 lose und mit Spiel 42 auf die Schiene 16 aufgelegt. Der Bügel 22 ist ebenfalls mit einem Ende an der Schiene 14 fest befestigt und mit seinem anderen Ende lose auf die Schiene 16 aufgelegt. Dabei liegen der Winkel 38 und das eine Ende des Bügels 22 direkt übereinander und werden mit einer nicht näher dargestellten Befestigung 44 gemeinsam auf der Schiene 14 arretiert. Aufgrund der losen Auflage auf der Schiene 16 und des Spiels 42 können thermisch bedingte Ausdehnungen des Gestänges 20 und des Bügels 22 erfolgen, ohne mechanische Spannungen zu erzeugen.

Beim Betreiben des Durchlaufofens kann durch hier nicht dargestellte Mittel ein Schutzgas in den Innenraum 34 eingeblasen werden, das dann in und gegen die Transportrichtung strömt und nicht erwünschte Gasanteile der Luft ausbläst. Ein Eindringen von Sauerstoff ist aufgrund der die beiden Gehäuseteile abdichtenden Flüssigkeit 32 wirksam verhindert.

## Patentansprüche

1. Vorrichtung zum Auftöten von Bauelementen auf Platinen unter Einwirkung eines Gases, mit einem Ofenraum, der von einem mindestens zweiteiligen Gehäuse umgeben ist, bei dem ein erstes Gehäuseteil mindestens ein Reservoir für ein Dichtungsmittel aufweist, in das ein zweites Gehäuseteil teilweise eintaucht, wobei das erste Gehäuseteil einen durchgehenden, das Reservoir umgreifenden Wandbereich aufweist, dadurch gekennzeichnet, daß das Dichtungsmittel eine Flüssigkeit (32) ist, daß das zweite Gehäuseteil (26, 28) ein tragendes Teil (26) und ein den Ofenraum ( 34) umgreifendes, dichtendes Teil (28) aufweist, wobei das dichtende Teil (28) im Bereich des Dichtungsmittels (32) das tragende Teil ( 26 ) umgreift, und daß im Bereich des Flüssigkeitsreservoirs der umgreifende Wandbereich (18) mit verstärkenden Mitteln (14, 16) ausgeführt ist.

2. Vorrichtung nach Anspruch 1, dadurch gekennzeichnet, daß mindestens eine Transporteinrichtung (36) und eine Heizeinrichtung (24) innerhalb des Gehäuses (18, 28) angeordnet sind.

3. Vorrichtung nach Anspruch 2, dadurch gekennzeichnet, daß die Transporteinrichtung (36) tragende Mittel (20, 38, 40) vorgesehen sind, die zumindest mit einem Teil (14) des ersten Gehäuseteils fest verbunden sind und auf einem weiteren Teil (16) des ersten Gehäuseteils lose aufliegen.

4. Vorrichtung nach Anspruch 2 oder 3, dadurch gekennzeichnet, daß die Heizeinrichtung (24) tragende Mittel (22) vorgesehen sind, die zumindest mit einem Teil (14) des ersten Gehäuseteils fest verbunden sind und auf einem weiteren Teil (16) des ersten Gehäuseteils lose aufliegen.

## Claims

1. Device for soldering components onto boards under the influence of a gas, having a furnace area which is surrounded by a housing which is in at least two parts and in which a first housing part has at least one reservoir for a sealant into which a second housing part is partially immersed, the first housing part having a continuous wall region surrounding the reservoir, characterized in that the sealant is a liquid (32), in that the second housing part (26, 28) has a load-bearing part (26) and a sealing part (28) which surrounds the furnace area (34), the sealing part (28) surrounding the load-bearing part (26) in the region of the sealant (32), and in that, in the region of the liquid reservoir, the surrounding wall region (18) is designed with reinforcing means (14, 16).

2. Device according to Claim 1, characterized in that at least one transportation device (36) and one heating device (24) are arranged inside the housing (18, 28).

3. Device according to Claim 2, characterized in that means (20, 38, 40) are provided which support the transportation device (36), are firmly connected to at least one part (14) of the first housing part and rest loosely on a further part (16) of the first housing part.

4. Device according to Claim 2 or 3, characterized in that means (22) are provided which support the heating device (24), are firmly connected to at least one part (14) of the first housing part and rest loosely on a further part (16) of the first housing part.

## Revendications

1. Dispositif de soudage de composants sur des plaquettes sous l'effet d'un gaz, avec un four entouré par un boîtier en au moins deux parties, avec une première partie de boîtier comportant au moins un réservoir d'agent d'étanchéité dans lequel pénètre partiellement une seconde partie de boîtier, la première partie de boîtier ayant une zone de paroi continue entourant le réservoir, caractérisé en ce que le moyen d'étanchéité est un liquide (32), la seconde partie de boîtier (26, 28) comporte une partie de support (26) et une partie d'étanchéité (28) entourant l'enceinte (34) du four, la partie d'étanchéité (28) entourant au niveau de l'agent d'étanchéité (32), la partie de support (26) et en ce qu'au niveau du réservoir à liquide, la zone de paroi (18), enveloppante, travaille avec des moyens renforcés (14, 16).

2. Dispositif selon la revendication 1, caractérisé en ce qu'au moins une installation de transport (34) et une installation de chauffage (24) sont logées dans le boîtier (18, 28).

3. Dispositif selon la revendication 2, caractérisé en ce que l'installation de transport (36) comporte des moyens de support (20, 38, 40) reliés solidairement au moins par une partie (14) de la première partie de boîtier et reposent librement sur une autre partie (16) de la première partie du boîtier.

4. Dispositif selon la revendication 1 ou 3, caractérisé en ce que l'installation de chauffage (24) comporte des moyens (22) qui sont reliés solidairement au moins à une partie (14) de la première partie du boîtier et s'appuient librement sur une autre partie (16) de la première partie de boîtier.
